# EUROPEAN PATENT SPECIFICATION

(11) **EP 2 416 251 B1**
(45) Date of publication and mention of the grant of the patent: **02.01.2013**
(21) Application number: 10305868.1
(22) Date of filing: 06.08.2010
(51) Int. Cl.: G06F 12/08, G06F 12/14, G06F 9/46, G06F 9/54

(54) **A method of managing computer memory, corresponding computer program product, and data storage device therefor**
Verfahren zum Verwalten eines Computerspeichers, entsprechendes Computerprogrammprodukt und Datenspeichervorrichtung dafür
Procédé de gestion de la mémoire d'un ordinateur, produit de programme informatique correspondant et dispositif de stockage de données correspondant

(43) Date of publication of application: 08.02.2012
(73) Proprietor: Alcatel Lucent, 75007 Paris (FR)
(72) Inventor: Mullender, Sape, 2600, Antwerp (BE); McKie, Jim Balmer, Murray Hill, NJ 07974 (US); Pianese, Fabio, 1000, Brussels (BE); Evans, Noah, 2000, Antwerp (BE)
(74) Representative: ALU Antw Patent Attorneys

(56) References cited:
- US-A- 5 920 895
- US-A1- 2008 229 117
- MENON A., ET AL.: "Optimizing Network Virtualization in Xen" PROCEEDINGS OF THE 2006 USENIX ANNUAL TECHNICAL CONFERENCE, 29 May 2006 (2006-05-29), pages 15-28, XP002623699
- CHERKASOVA, L. ET AL:: "Measuring CPU Overhead for I/O Processing in the Xen Virtual Machine Monitor" PROCEEDINGS OF THE USENIX ANNUAL TECHNICAL CONFERENCE, 20 May 2001 (2001-05-20), XP002623700

## Description

### Field of the Invention

The invention relates to a method of managing computer memory comprising the steps of maintaining a page table entry for mapping a virtual address to a physical address and a cache comprising a plurality of data blocks and, in response to a reference to the virtual address, translating the virtual address into the physical address by means of the page table entry and fetching data from the physical address into the cache. The invention further relates to a computer program product comprising computer-executable instructions for performing said method when the program is run on a computer, and to a device programmed or configured to perform said method.

### Background

In computing, memory management is the act of managing computer memory. In its simpler forms, this involves providing ways to allocate portions of memory to programs at their request and freeing it for reuse when no longer needed. The management of memory is critical to any computer system.

Virtual memory systems separate memory addresses used by a process from physical addresses, allowing separation of processes and increasing the effectively available amount of memory. The quality of the virtual memory manager has a significant impact on overall system performance.

Ludmila Cherkasova and Rob Gardner outline a virtual memory system in "Measuring CPU Overhead for I/O Processing in the Xen Virtual Machine Monitor", Proceedings of the USENIX Annual Technical Conference 2005, Anaheim, California, United States of America. To allow an operating system (OS) to retrieve data from secondary storage for use in main memory, this conventional system makes use of a memory management scheme known as paging, wherein the data is retrieved in fixed-size blocks called memory pages. Herein, by secondary storage, sometimes called external memory, is meant any storage not directly accessible by the central processing unit (CPU), such as a hard disk drive, optical storage, flash memory, floppy disk, magnetic tape, paper tape, punched card, or Zip drive.

To allow for efficient communications with other systems, commonly called input/output or I/O, the state-of-the-art virtual memory system implements a mechanism known as page flipping. According to this technique, an application specifies one or more memory pages for receiving input data, allowing the OS to supply that data by means of its built-in paging scheme. To this end, the OS "swaps" the specified memory pages in the application's working memory, commonly called its address space, with the requested input.

A major downside of this known system lies in the fact that the input data to be supplied rarely fits the target memory pages precisely. The remainder of each memory page swapped in thus needs to be zeroed to cater for applications that rely on memory initialization as well as to prevent the requesting application from obtaining unauthorized access to foreign, potentially sensitive data. In software development, by zeroing is meant overwriting data with a fixed, meaningless value, e.g., zero, to prevent its accidental disclosure, such disclosure potentially allowing a security breach by the requesting application.

According to US 5 920 895 A, the efficiency of writing files that are cached using mapped file I/O is improved by suppressing zeroing of uninitialized data in cached pages of a file until the file is mapped by a user mode thread. In an operating system where paging operations are controlled by a virtual memory manager and memory based caching using mapped file I/O is administered by a cache manager, suppressing zeroing of mapped files on writes is implemented by a set of internal operating system interfaces for communications between the virtual memory manager and the cache manager. When a file being cached is not yet mapped by a user mode thread, the cache manager tracks the extent to which a cache page of the file is written so that any uninitialized data in the cache page can later be zeroed when the file is mapped by a user mode thread.

A method for preventing digital piracy in a computing environment according to US 2008/229117 A1 comprises loading an application into the computing environment, wherein the application is encrypted using a cryptographic key; assigning a virtual address space to the application; loading the cryptographic key for the application into a register which is accessible only by a central processing unit; and storing an index value for the key in the register in a page table entry which corresponds to the virtual address space for the application, thereby linking the virtual address space to the key for the application.

In MENON A., ET AL.: "Optimizing Network Virtualization in Xen", PROCEEDINGS OF THE 2006 USENIX ANNUAL TECHNICAL CONFERENCE, 29 May 2006 (2006-05-29), XP002623699, the authors propose and evaluate three techniques for optimizing network performance in the Xen virtualized environment. Their techniques retain the basic Xen architecture of locating device drivers in a privileged 'drive' domain with access to I/O devices, and providing network access to unprivileged 'guest' domains through virtualized network interfaces.

### Summary

It is an objective of the invention to present an improved approach to virtual memory management that eliminates or reduces the need for zeroing upon page flipping. It is a further objective to provide a method that is suitable for memory of limited bandwidth, that is, the rate at which data can be read from or stored in the memory by a CPU. An even further objective lies in the reduction of load imposed on the memory bus, that is, the computer subsystem that connects the main memory to the memory controller managing the flow of data going to and from that main memory. Herein, by main memory, also called primary storage or internal memory, is meant any storage directly accessible by the CPU, such as random-access memory (RAM), read-only memory (ROM), processor registers, or processor caches.

This objective is achieved by a method of managing computer memory comprising the steps of maintaining a page table entry for mapping a virtual address to a physical address and a cache comprising a plurality of data blocks and, in response to a reference to the virtual address, translating the virtual address into the physical address by means of the page table entry and fetching data from the physical address into the cache, wherein the page table entry comprises a plurality of indicators, each data block corresponding to one of the plurality of indicators, and, once fetching the data into the cache has started, the method comprises the further step of, in response to an indicator, selected from said plurality of indicators, being set, zeroing the corresponding data block. The objective further is achieved by a computer program product comprising computer-executable instructions for performing said method when the program is run on a computer, or by a device programmed or configured to perform said method.

A main idea of the invention is to augment the page table, a data structure used by the virtual memory system of the OS to store the mapping between a virtual address, that is, the index for a location in an application's working memory, and the corresponding physical address. In the context of virtual memory, a virtual address is unique only to the accessing process, whereas a physical address refers to the actual storage cell of main memory.

Further developments of the invention can be gathered from the dependent claims and the following description.

In the following the invention will be explained further making reference to the attached drawing.

To manage computer memory according to an embodiment of the invention, a page table entry is maintained to map a virtual address to a physical address. Further, a cache comprising a plurality of data blocks is maintained. The page table entry comprises a plurality of indicators, each data block corresponding to an indicator. In response to a reference to the virtual address, the latter is translated into the physical address by means of the page table entry, and data is fetched from that physical address into the cache. Upon fetching the data, in response to an indicator being set, the corresponding data block is zeroed.

### Brief Description of the Figures

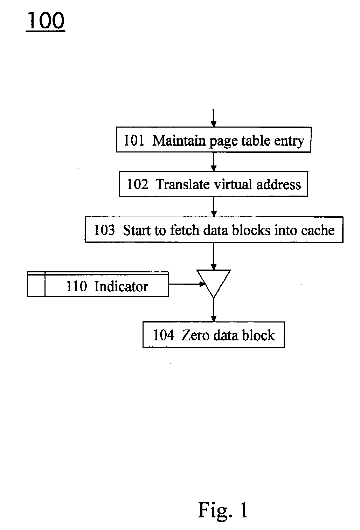

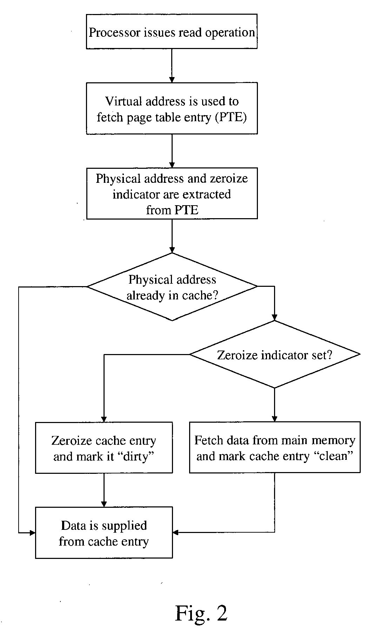

Fig. 1 shows a flowchart depicting a method according to an embodiment of the invention.

### Description of the Embodiments

In the following, a method according to the invention is elucidated by way of example, referencing Fig. 1.

The flowchart 100 of Fig. 1 comprises a first processing step 101, a second processing step 102, a third processing step 103, and a fourth processing step 104. A set of arrows represents the flow of control passing through the processing steps 101 to 103, merging with internal storage 110, and finally passing into the fourth processing step 104. Within this flow, an arrow starting at a first symbol and ending at a second symbol indicates that control passes from the first symbol to the second symbol.

In the embodiment at hand, the method is applied by a dedicated memory management unit (MMU). In microprocessor design, by MMU is meant any computer hardware component responsible for handling access to memory requested by the CPU. Besides virtual memory management, that is, the translation of virtual addresses to physical addresses, the MMU may support techniques such as memory protection, bus arbitration, and, in simpler computer architectures such as 8-bit systems, bank switching.

To allow for processes to be based on a notion of contiguous working memory, commonly called an address space, while in fact that memory may be physically fragmented and may even overflow on to secondary storage, the MMU supports paging, thus taking the form of what is known in the art as a paged MMU (PMMU).

To reduce the average time required by the CPU to access memory, the PMMU further controls a CPU cache, that is, a smaller, faster memory configured to store copies of data from the most frequently used main memory locations. When the CPU needs to read from or write to a location in main memory, it first checks whether a copy of that data is in the cache. If so, the CPU immediately reads from or writes to the cache, which is inherently faster than reading from or writing to main memory. In the context of caching, the main memory is sometimes referred to as the cache's backing store.

More specifically, the CPU cache controlled by the PMMU comprises a data cache to speed up data fetch and store as well as a translation look-aside buffer (TLB) to speed up virtual memory management for both executable instructions and data. The TLB comprises a fixed number of slots that contain page table entries (PTEs) mapping virtual addresses to physical addresses. In a typical implementation, each PTE comprises between 32 and 64 bits.

In the first processing step 101, the PMMU maintains a PTE for mapping a virtual address to a physical address. Further, the PMMU maintains a cache comprising a plurality of data blocks, commonly called cache lines or cache blocks in the context of CPU caching. Typically, each data block ranges in size from 8 to 512 bytes. For maximum hardware acceleration, the PMMU at hand employs data blocks larger than the amount of data that can be requested by a single CPU instruction, which typically ranges from 1 byte to 16 bytes in state-of-the-art 32-bit and 64-bit CPU architectures.

The PTE maintained in the first processing step 101 comprises a plurality of indicators, each data block corresponding to an indicator, indicating whether the corresponding data block needs to be zeroed before providing it to a requesting application. Consequently, the indicator takes the form of a flag, that is, a Boolean variable having either of the values "true" or "false". To minimize the storage capacity required by the PTE, each indicator takes the form of a bit, each of its binary values having an assigned meaning. To further allow the CPU to set multiple indicators in a single bitwise operation, the bits are grouped into a suitably sized vector known in computer arithmetic as a bitmask. In an alternative embodiment, to further decrease the size of the PTE at the expense of average write speed, each bit may be interpreted to correspond to a plurality of data blocks, effectively reducing the number of bits that constitute the bitmask.

In an intermediate step (not depicted), the OS, on request by an application, receives a data block over a computer network by means of an associated network interface controller (NIC), also known as a network interface card, network adapter, or Local Area Network (LAN) adapter. For maximum throughput, the data block is transmitted by means of a Gigabit Ethernet (GbE, 1 GigE) connection, that is, at a rate of one gigabit per second, as defined by the IEEE 802.3-2008 standard. To further speed up the operation by avoiding the overhead of copying the I/O data by means of the CPU, the OS employs page flipping to store it in a memory page specified by the application. Assuming that only some of the data blocks that make up the memory page are modified by the I/O operation, instead of instantly zeroing the remaining, unaffected data blocks, the OS sets the bits in the PTE's bitmask that correspond to the data blocks to be zeroed while clearing those bits that correspond to the modified data blocks.

Ethernet being a packet switching protocol, the I/O data takes the form of a data transmission unit called a packet or, in this context, Ethernet frame. The frame may vary in size between a lower limit of 64 bytes, such as required for a simple acknowledgment, and an upper limit, commonly called maximum transmission unit (MTU) in the art of computer networking, of 9000 bytes or more. Taking into account a typical memory page size of up 4 to 64 kilobytes, a conventional memory management system, in this scenario, would impose a significant zeroing overhead on the CPU and memory due to the significant portion of the memory page that needs to be purged upon receiving each packet. A further benefit of the invention thus lies in its particular aptitude for the receipt of small to medium-sized packet data.

In most cases, the amount of data received through the NIC may not coincide with a multiple of the fixed size of a data block as defined by the PTE. In such cases, at least part of the first and/or last data block affected by the I/O remain undefined. To avoid disclosure of the data contained therein to the requesting application, the OS needs to zero that remaining part of the data block instantly prior to page flipping.

In an alternative embodiment, instead of receiving the data through a NIC, the OS may be requested to load a program into main memory for execution by the CPU. In this case, to avoid a physical transfer of the entire executable, the program loader updates the page table and TLB, effectively declaring a mapping of the virtual address designated for the executable to the contents of the associated object file. The segment of virtual memory thus mapped is commonly called a memory-mapped file, bearing the advantage that unused program code may never need to be loaded into main memory at all.

As the case may be, the program to be loaded comprises a section known as a block started by symbol (BSS), often referred to as a BSS segment, containing statically allocated variables that are expected to be filled with zero-valued data initially, that is, when execution of the program begins. In this case, to avoid zeroing of the entire BSS section prior to execution, the OS employs the above mechanism analogously by setting the bits in the PTE's bitmask that correspond to the data blocks to be zeroed while clearing those bits that correspond to other data segments of the program.

In the second processing step 102, in response to the virtual address being referenced by a CPU instruction, the PMMU fulfills its primary function of virtual memory management by translating the virtual address into the physical address. To this end, the PMMU employs the PTEs contained in the TLB of the first processing step 101. More particularly, the PMMU first searches the TLB for a PTE that corresponds to the virtual address at hand. If a match is found, a situation known in the art of virtual memory management as a TLB hit, the physical address can be retrieved directly from the matching PTE. Otherwise, the situation is commonly called a TLB miss, requiring the PMMU to consult the page table maintained by the OS. If this page table contains a matching PTE, the PMMU caches it in the TLB and re-executes the faulting CPU instruction.

In the third processing step 103, the PMMU accesses the physical address derived in the second processing step 102 and starts to fetch data blocks contained therein into the CPU's data cache. If the data cache is already full at this point, an occupied cache line may need to be overwritten and its prior contents discarded to accommodate the newly fetched data block. Various algorithms are known in the art for selecting which cache line to evict.

To speed up any write operation on the data cache, the latter takes the form of a write-back cache, sometimes called write-behind cache. According to this policy, writes are not immediately mirrored to the backing store. Instead, the PMMU tracks which cache lines have been overwritten by the CPU and accordingly marks these locations as "dirty". Prior to eviction of a dirty cache line, the respective data block is written back to the backing store to preserve its updated contents for future read access. This approach is known in computer science as a "lazy write". Upon writing back a data block, the PMMU needs to clear the corresponding bit in the PTE's bitmask to prevent that data block from being zeroed in case it is ever retrieved.

Once a free cache line has been identified or an occupied one has been freed, for each data block to be fetched, the PMMU consults the bitmask contained in the PTE found in its internal storage 110. If its corresponding bit is set, the PMMU, instead of retrieving the data block from main memory, zeros the respective cache line in the fourth processing step 104 prior to making it available to the requesting application.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A method of managing computer memory, the method comprising the steps of
maintaining (101) a page table entry for mapping a virtual address to a physical address and a cache comprising a plurality of data blocks and,
in response to a reference to the virtual address, translating (102) the virtual address into the physical address by means of the page table entry and fetching (103) data from the physical address into the cache,
**characterized in that** the page table entry comprises a plurality of indicators, each data block corresponding to one of the plurality of indicators, and, once fetching the data into the cache has started (103), the method comprises the further step of,
in response to an indicator (110), selected from said plurality of indicators, being set, zeroing (104) the corresponding data block.

2. A method according to claim 1, **characterized in that** the page table entry comprises a bitmask and the indicators are bits contained in the bitmask.

3. A method according to claim 1, **characterized in that** the page table entry is associated with a memory page comprising the plurality of data blocks and the method comprises the intermediate steps of
receiving a data block,
storing the data block in the memory page, and
clearing the indicator to which the data block corresponds.

4. A method according to claim 1, **characterized in that** the method comprises the further step of
setting the remaining ones of said plurality of indicators, to which the data block does not correspond.

5. A method according to claim 3 or 4, **characterized in that** the method comprises the subsequent steps of
overwriting a further data block and
clearing the indicator to which the further data block corresponds.

6. A computer program product comprising computer-executable instructions for performing a method according to claim 1 when the program is run on a computer.

7. A computer program product according to claim 6, **characterized in that** the computer program product comprises an operating system.

8. A device comprising
means for maintaining (101) a page table entry for mapping a virtual address to a physical address and a cache comprising a plurality of data blocks and means for,
in response to a reference to the virtual address, translating (102) the virtual address into the physical address by means of the page table entry and fetching (103) data from the physical address into the cache, **characterized in that** the page table entry comprises a plurality of indicators, each data block corresponding to one of the plurality of indicators, and the device comprises further means for once fetching the data into the cache has started (103) and
in response to an indicator (110), selected from said plurality of indicators, being set, zeroing (104) the corresponding data block.

9. A device according to claim 8, **characterized in that** the device comprises at least one of the following:
a central processing unit,
a memory management unit, and
a data cache.

10. A device according to claim 8 or 9, **characterized in that** the device further comprises a translation look-aside buffer configured to store the page table entry, wherein the virtual address is translated (102) by means of the translation look-aside buffer.

## Patentansprüche

1. Verfahren zum Verwalten eines Computerspeichers, wobei das Verfahren die folgenden schritte umfasst:
Erhalten (101) eines Seitentabelleneintrags zum Abbilden einer virtuellen Adresse auf eine physikalische Adresse und einen Cache-Speicher, welcher eine Vielzahl von Datenblöcken enthält, und
in Reaktion auf einen Verweis auf die virtuelle Adresse, Übersetzen (102) der virtuellen Adresse in die physikalische Adresse anhand des Seitentabelleneintrags, und Abrufen (103) von Daten aus der physikalischen Adresse in den Cache-Speicher, **dadurch gekennzeichnet, dass** der Seitentabelleneintrag eine Vielzahl von Indikatoren umfasst, wobei jeder Datenblock einem der Vielzahl von Indikatoren entspricht, und dass, sobald das Abrufen der Daten in den Cache-Speicher begonnen hat (103), das Verfahren den folgenden weiteren Schritt umfasst:
In Reaktion auf das Setzen eines Indikators (110), ausgewählt aus der besagten Vielzahl von Indikatoren, Abnullen (104) des entsprechenden Datenblocks.

2. Verfahren nach Anspruch 1, **dadurch gekennzeichnet, dass** der Seltentabelleneintrag eine Bitmaske umfasst und die Indikatoren in der Bitmaske enthaltene Bits sind.

3. Verfahren nach Anspruch 1, **dadurch gekennzeichnet, dass** der Seitentabelleneintrag mit einer Speicherseite assoziiert ist, welche die Vielzahl von Datenblöcken enthält, und dass das Verfahren die folgenden Zwischenschritte umfasst:
Empfangen eines Datenblocks,
Speichern des Datenblocks in der Speicherseite, und
Löschen des Indikators, welchem der Datenblock entspricht.

4. Verfahren nach Anspruch 1, **dadurch gekennzeichnet, dass** das Verfahren den folgenden weiteren Schritt umfasst:
Setzen der restlichen der besagten Vielzahl von Indikatoren, welchen der Datenblock nicht entspricht.

5. Verfahren nach Anspruch 3 oder 4, **dadurch gekennzeichnet, dass** das Verfahren die folgenden anschließenden Schritte umfasst:
Überschreiben eines weiteren Datenblocks, und
Löschen des Indikators, welchem der Datenblock entspricht.

6. Computerprogramm-Produkt mit computerausführbaren Befehlen zum Durchführen eines Verfahrens gemäß Anspruch 1, wenn das Programm auf einem Computer läuft.

7. Computerprogramm-Produkt nach Anspruch 6, **dadurch gekennzeichnet, dass** das Computerprogramm-Produkt ein Betriebssystem umfasst.

8. Vorrichtung, umfassend:
Mittel zum Erhalten (101) eines Seitentabelleneintrags zum Abbilden einer virtuellen Adresse auf eine physikalische Adresse und einen Cache-Speicher, welcher eine Vielzahl von Datenblöcken enthält, und Mittel, um
in Reaktion auf einen Verweis auf die virtuelle Adresse, die virtuelle Adresse anhand des Seitentabelleneintrags In die physikalische Adresse zu übersetzen (102) und Daten aus der physikalischen Adresse in den Cache-Speicher abzurufen (103), **dadurch gekennzeichnet, dass** der Seitentabelleneintrag eine Vielzahl von Indikatoren umfasst, wobei jeder Datenblock einem der Vielzahl von Indikatoren entspricht, und dass, die Vorrichtung weitere Mittel umfasst, um, sobald das Abrufen der Daten in den Cache-Speicher begonnen hat (103), und
in Reaktion auf das Setzen eines Indikators (110), ausgewählt aus der besagten Vielzahl von Indikatoren, den entsprechenden Datenblock abzunullen (104).

9. Vorrichtung nach Anspruch 8, **dadurch gekennzeichnet, dass** die Vorrichtung mindestens eine der folgenden Einrichtungen umfasst:
eine Hauptprozessoreinheit,
eine Speicherverwaltungseinheit, und
einen Daten-Cache-Speicher.

10. Vorrichtung nach Anspruch 8 oder 9, **dadurch gekennzeichnet, dass** die Vorrichtung weiterhin einen Übersetzungspuffer umfasst, welcher für das Speichern des Seitentabelleneintrags konfiguriert ist, wobei die virtuelle Adresse anhand des Übersetzungspuffers übersetzt (102) wird.

## Revendications

1. Procédé de gestion de la mémoire d'un ordinateur, le procédé comprenant les étapes suivantes
conserver (101) une entrée de table de page pour mettre en correspondance une adresse virtuelle avec une adresse physique et une antémémoire comprenant une pluralité de blocs de données et,
en réponse à une référence à l'adresse virtuelle, traduire (102) l'adresse virtuelle en l'adresse physique au moyen de l'entrée de table de page et récupérer (103) des données à partir de l'adresse physique dans l'antémémoire,
**caractérisé en ce que** l'entrée de table de page comprend une pluralité d'indicateurs, chaque bloc de données correspondant à un indicateur parmi la pluralité d'indicateurs, et, une fois que la récupération des données dans l'antémémoire a commencé (103), le procédé comprend l'étape supplémentaire suivante,
en réponse à la définition d'un indicateur (110), choisi parmi ladite pluralité d'indicateurs, mettre à zéro (104) le bloc de données correspondant.

2. Procédé selon la revendication 1, **caractérisé en ce que** l'entrée de table de page comprend un masque de bits et les indicateurs sont des bits contenus dans le masque de bits.

3. Procédé selon la revendication 1, **caractérisé en ce que** l'entrée de table de page est associée à une page de mémoire comprenant la pluralité de blocs de données et le procédé comprend les étapes intermédiaires suivantes
recevoir un bloc de données,
stocker le bloc de données dans la page de mémoire, et
effacer l'indicateur auquel le bloc de données correspond.

4. Procédé selon la revendication 1, **caractérisé en ce que** le procédé comprend l'étape supplémentaire suivante
définir les indicateurs restants parmi ladite pluralité d'indicateurs, auxquels le bloc de données ne correspond pas.

5. Procédé selon la revendication 3 ou 4, **caractérisé en ce que** le procédé comprend les étapes ultérieures suivantes
écraser un autre bloc de données et
effacer l'indicateur auquel l'autre bloc de données correspond.

6. Produit de programme Informatique comprenant des instructions exécutables par un ordinateur pour réaliser un procédé selon la revendication 1 lorsque le programme est exécuté sur un ordinateur.

7. Produit de programme informatique selon la revendication 6, **caractérisé en ce que** le produit de programme informatique comprend un système d'exploitation.

8. Dispositif comprenant
moyens pour conserver (101) une entrée de table de page pour mettre en correspondance une adresse virtuelle avec une adresse physique et une antémémoire comprenant une pluralité de blocs de données et des moyens,
en réponse à une référence à l'adresse virtuelle, pour traduire (102) l'adresse virtuelle en l'adresse physique au moyen de l'entrée de table de page et pour récupérer (103) des données à partir de l'adresse physique dans l'antémémoire, **caractérisé en ce que** l'entrée de table de page comprend une pluralité d'indicateurs, chaque bloc de données correspondant à un indicateur parmi la pluralité d'indicateurs, et le dispositif comprend d'autres moyens, une fois que la récupération des données dans l'antémémoire a commencé (103) et
en réponse à la définition d'un indicateur (110), choisi parmi ladite pluralité d'indicateurs, pour mettre à zéro (104) le bloc de données correspondant.

9. Dispositif selon la revendication 8, **caractérisé en ce que** le dispositif comprend au moins un des éléments suivantes :
une unité centrale de traitement,
une unité de gestion de la mémoire, et
une antémémoire de données.

10. Dispositif selon les revendications 8 ou 9, **caractérisé en ce que** le dispositif comprend en outre un répertoire de pages actives configuré pour stocker l'entrée de table de page, dans lequel l'adresse virtuelle est traduite (102) au moyen du répertoire de pages actives.
